(19) Europäisches Patentamt
European Patent Office
Office européen des brevets

(11) EP 1 991 629 B1

(12) EUROPÄISCHE PATENTSCHRIFT

(45) Veröffentlichungstag und Bekanntmachung des Hinweises auf die Patenterteilung:
**21.11.2018 Patentblatt 2018/47**

(21) Anmeldenummer: **07711588.9**

(22) Anmeldetag: **20.02.2007**

(51) Int Cl.:
***C09D 183/10*** *(2006.01)* ***C08G 77/452*** *(2006.01)*

(86) Internationale Anmeldenummer:
**PCT/EP2007/001434**

(87) Internationale Veröffentlichungsnummer:
**WO 2007/101537 (13.09.2007 Gazette 2007/37)**

# (54) HYBRIDMEMBRANEN, VERFAHREN ZUR HERSTELLUNG DER HYBRIDMEMBRANEN UND BRENNSTOFFZELLEN UNTER VERWENDUNG DERARTIGER HYBRIDMEMBRANEN

HYBRID MEMBRANES, METHOD FOR THE PRODUCTION THEREOF, AND FUEL CELLS USING SUCH HYBRID MEMBRANES

MEMBRANES HYBRIDES, PROCÉDÉ DE FABRICATION DES MEMBRANES HYBRIDES ET CELLULES ÉLECTROCHIMIQUES FAISANT INTERVENIR CES MEMBRANES HYBRIDES

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **08.03.2006 DE 102006010705**

(43) Veröffentlichungstag der Anmeldung:
**19.11.2008 Patentblatt 2008/47**

(73) Patentinhaber: **Carl Freudenberg KG**
**69469 Weinheim (DE)**

(72) Erfinder:
- **GRONWALD, Oliver**
  **37085 Göttingen (DE)**
- **MELZNER, Dieter**
  **37075- Göttingen (DE)**
- **MÄHR, Ulrich**
  **14052 Berlin (DE)**
- **REICHE, Annette**
  **37079 Göttingen (DE)**

(74) Vertreter: **Grättinger Möhring von Poschinger Patentanwälte Partnerschaft et al**
**Wittelsbacherstrasse 2b**
**82319 Starnberg (DE)**

(56) Entgegenhaltungen:
**WO-A-01/18894 WO-A-2005/111114**

- **YANO ET AL: "Physical properties and structure of organic-inorganic hybrid materials produced by sol-gel process" MATERIALS SCIENCE AND ENGINEERING C, ELSEVIER SCIENCE S.A, CH, Bd. 6, Nr. 2-3, November 1998 (1998-11), Seiten 75-90, XP005278966 ISSN: 0928-4931 in der Anmeldung erwähnt**
- **GULTEK A ET AL: "Preparation and characterization of polybenzimidazole-clay hybrid materials" MATERIALS SCIENCE AND ENGINEERING B, ELSEVIER SEQUOIA, LAUSANNE, CH, Bd. 107, Nr. 2, 15. März 2004 (2004-03-15), Seiten 166-171, XP004492096 ISSN: 0921-5107 in der Anmeldung erwähnt**
- **STAITI P ET AL: "MEMBRANES BASED ON PHOSPHOTUNGSTIC ACID AND POLYBENZIMIDAZOLE FOR FUEL CELL APPLICATION" JOURNAL OF POWER SOURCES, ELSEVIER, AMSTERDAM, NL, Bd. 90, 2000, Seiten 231-235, XP009016102 ISSN: 0378-7753 in der Anmeldung erwähnt**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft Hybridmembranen , welche aus einem organischen Polymer und aus einem anorganischen Polymer bestehen, ein Verfahren zur Herstellung von Hybridmembranen und die Verwendung dieser Hybridmembranen in Polymerelektrolytmembran-Brennstoffzellen.

Für die Verwendung in Hochtemperatur-Brennstoffzellen sind Polymerelektrolytmembranen auf Basis von Polybenzimidazol (PBI) bekannt [US 5,525,436, WO 200118894 A2, DE 103 01 810 A1, DE 101 55 543 C2 und M. Rikukawa, K. Sanui, Prog. Polym. Sci. 2000, 1463 - 1502]. Das basische Polymer bildet nach Dotierung mit Phosphorsäure eine protonenleitende Phase, in welcher der Transport von Protonen nicht an das Vorhandensein von Wasser gebunden ist und somit einen Betrieb dieser Brennstoffzellen im Temperaturbereich bis 200 °C erlaubt. Durch den Dotierungsprozess wird die hohe thermische Stabilität des PBI nicht beeinträchtigt, während hingegen die mechanische Stabilität abnimmt. Es ist daher üblich, das Polybenzimidazol durch kovalente Bindung zu vernetzen. Als vernetzende Reagenzien sind bisfunktionale Verbindungen auf Kohlenwasserstoffbasis mit Epoxid- oder Isocyanatgruppen [WO 200044816 A1, US 6,790,553 B1, DE 103 01 810 A1] in Verwendung, welche mittels Reaktion mit den NH-Gruppen des Polybenzimidazols die Polymerketten untereinander vernetzen. Jedoch ist die chemische und thermische Stabilität der Vernetzungsstellen, insbesondere die Stabilität der vernetzenden organischen Reste gegenüber Oxidationsmitteln bei höheren Temperaturen limitiert. Derartige aliphatische Vernetzungsketten leisten keinen Beitrag zur Protonenleitfähigkeit. Durch Einschränkung der Beweglichkeit des Gesamtsystems sowie durch Limitierung des Aufnahmevermögens des vernetzten Polymers für das die Protonenleitfähigkeit vermittelnde Dotierungsmittel kann die Leitfähigkeit der Membranen zusätzlich eingeschränkt werden, wenn PBI über Diepoxide oder Diisocyanate vernetzt wird.
Die Stabilität einer organischen Polymermatrix kann durch den Einbau von silikatischem Verstärkungsmaterial verbessert werden. Aus dem derzeitigen Stand der Technik sind beispielsweise Hybridmembranen, jeweils bestehend aus Hydroxypropylcellulose (HPC), Polylvinylalkohol (PVA) und Polyvinylidenfluorid (PVDF) und silikatischem Material, bekannt. Die Herstellung dieser Hybridmembranen erfolgt durch Mischen des Polymers mit alkoxysubstituierten Silanen wie beispielsweise Tetraethoxysilan (TEOS), wobei mittels eines säurekatalysierten Sol-Gel-Prozesses das anorganische Material in der organischen Polymermatrix abgeschieden wird. Die Wechselwirkung zwischen organischer und anorganischer Phase kann durch Wasserstoffbrückenbindungen vermittelt werden und die mechanische Stabilität dieser Hybridmaterialien steigt mit zunehmendendem Anteil silikatischen Materials [S. Yano, Materials Science and Engineering C6 (1998), 75 - 90]. Jedoch liegt für die anorganische Phase der erreichbare Kondensationsgrad der säurekatalysierten Kondensation lediglich bei 65 - 75 %. , während unter Basenkatalyse Kondensationsgrade von 80 - 90 % erreicht werden [D. A. Loy, K. J. Shea, Chem. Rev. 1995, 95, 1431 - 1442]. Für basische Polymere als Polymermatrix ist die säurekatalysierte Sol-Gel-Kondensation als Methode ungeeignet, da die durch Säure-Base-Wechselwirkungen eintretende Salzbildung die Unlöslichkeit des Polymers in organischen Lösungsmitteln bewirkt. Für eine Polybenzimidazolmatrix ist in der Literatur die Einarbeitung von organisch modifiziertem $Na^+$-bentonit bekannt, wobei der entstehende Bentonit-PBI-Nanokomposit eine erhöhte thermische Stabilität gegenüber unmodifiziertem PBI aufweist [T. Seckin, Materials Science and Engineering B 107 (2004) 166-171]. Bekannt ist die Einarbeitung von auf Silika immobilisierten Phosphorwolframsäuren als Füllstoff ("Filler") in eine Polybenzimidazolmatrix für die Verwendung als Polymerelektrolyt in Brennstoffzellen [P. Staiti, M. Minutoli, S. Hocevar, J. Power Sources 90 (2000) 231 - 235]. Derartige Membranen werden durch Zugabe eines Silika-Phosphorwolframsäure-Gemisches zu einer Lösung des Polybenzimidazols in N,N-Dimethylacetamid hergestellt. Sie weisen eine geringe Protonenleitfähigkeit oberhalb 110 °C auf. Für AB-PBI als Polybenzimidazolmodifikation wurde durch direktes Einarbeiten von Phosphormolybdänsäuren eine Verbesserung der Leitfähigkeit im phosphorsäuredotiertem Zustand erreicht [P. Gomez-Romereo, J. A. Asensio, S. Borros, Electrochimica Acta 50 (2005), 4715-4720]. Hier wurde die Heteropolysäure in einer Lösung von AB-PBI in Methansulfonsäure vor dem Membranherstellungsprozess gelöst und es wurden homogene Gießlösungen erhalten.

Weiterhin ist aus der WO 2005111114 A1 ein protonenleitfähiges, vernetztes Polysiloxan mit heteroatomhaltigen funktionellen Gruppen in der Seitenkette zur Verwendung in protonenleitfähigen Membranen für Brennstoffzellen bekannt.

Es ist daher Aufgabe der Erfindung, Membranen bereitzustellen, welche sowohl undotiert als auch dotiert eine hohe mechanische und thermische Stabilität aufweisen, welche eine hohe Bindungskraft für Dotierungsmittel sowie in der dotierten Form eine dauerhaft hohe Protonenleitfähigkeit besitzen, und ein Verfahren zur Herstellung derartiger Membranen und von Brennstoffzellen unter Verwendung derartiger Membranen vorzuschlagen.

Die Aufgaben werden durch die in den Ansprüchen definierten Gegenstände gelöst.

Die erfindungsgemäßen Hybridmembranen bestehen aus mindestens einem basischen organischen und aus mindestens einem anorganischen Polymer. Diese Polymere sind auf molekularer Ebene durchmischt. Das anorganische Polymer ist aus mindestens zwei Vorläufermonomeren während der Membranbildung gebildet. Unter einem anorganischen Polymer soll ein Polymer verstanden werden, bei dem mindestens eine Sorte Atome A von Haupt- und Nebengruppenelementen über die Wiederholungseinheit $(-A-O-)_x$ miteinander mindestens zweifach verknüpft sind. Hierbei können Atome A über die Wiederholungseinheit $(-A-O-)_x$ sowohl mit Atomen desselben Elementes als auch mit Atomen

anderer Elemente verknüpft sein. "Auf molekularer Ebene durchmischt" bedeutet im Sinne der Erfindung, daß Oligomer- und Polymerstrukturen mit einer beliebigen Anzahl x der Wiederholungseinheit $(-A-O-)_x$ in Ketten-, Band-, Stern- oder Schichtstruktur die Ketten bzw. Netzwerke des organischen Polymers interpenetrieren. Für A = Si ist ein Siliciumatom der Wiederholungseinheit $(-A-O-)_x$ dabei Bestandteil von mindestens einer weiteren solchen Einheit.

Zwischen den Polymeren der erfindungsgemäßen Hybridmembranen ist eine Wechselwirkung vorhanden. Die Wechselwirkung besteht aus kovalenten Bindungen. Dadurch wird erreicht, daß die erfindungsgemäßen Hybridmembranen eine hohe thermische und mechanische Stabilität haben. Aufgrund ihrer erhöhten mechanischen Stabilität weisen die erfindungsgemäßen Hybridmembranen ein Elastizitätsmodul von mindestens 5000 $N/mm^2$ auf, wobei sie bei Raumtemperatur Zugspannungen bis mindestens 150 $N/mm^2$ widerstehen.

In einer bevorzugten Ausgestaltung der Erfindung ist das mindestens eine organische Polymer ein basisches Polymer, welches aus der Gruppe umfassend Polybenzimidazole, Polypyridine, Polypyrimidine, Polyimidazole, Polybenzthiazole, Polybenzoxazole, Polyoxadiazole, Polychinoxaline, Polythiadiazole und/oder Poly(tetrazapyrene) ausgewählt ist. Bevorzugt sind Poly(2,2'-(m-phenylen)-5,5'-dibenzimidazol) und/oder Poly-2,5-benzimidazol.

In einer besonders bevorzugten Ausführungsform der Erfindung weist eine 1-gewichtsprozentige Lösung von Poly(2,2'-(m-phenylen)-5,5'-dibenzimidazol) in N,N-Dimethylacetamid eine inherente Viskosität von mindestens 0.85 dl/g auf.

In einer weiteren besonders bevorzugten Ausführungsform weist eine 1-gewichtsprozentige Lösung von Poly-2,5-benzimidazol in Ethanol mit 3 Gew% Natriumhydroxid eine inherente Viskosität von mindestens 1.5 dl/g auf.

Das mindestens eine anorganische Polymer der erfindungsgemäßen Hybridmembranen stellt eine Verstärkung für das mindestens eine organische Polymer dar. Verstärkung bedeutet, daß die Hybridmembran durch das anorganische Polymer eine höhere mechanische und thermische Langzeitstabilität und nach Dotierung eine höhere Protonenleitfähigkeit aufweist als eine Vergleichsmembran, die lediglich aus dem mindestens einen organischen Polymer besteht.

In einer bevorzugten Form besteht das anorganische Polymer aus Wiederholungseinheiten $(-A-O-)_x$ mit A = W, Si, Sb, P, Ta, Nb, Ti, S, As, Bi, Se, Ge, Sn, Pb, B, Al, Cr, Zr und/oder Mo mit den verschiedenen Atomsorten in variabler Abfolge, wobei A mit weiteren Substituenten versehen sein kann. In einer besonders bevorzugten Ausführungsform der Erfindung besteht das anorganische Polymer der Hybridmembran aus einem silikatischen Polymer mit ausschließlich A = Si.

Unter Vorläufermonomeren für das anorganische Polymer sollen folgende Verbindungsgruppen mit der allgemeinen Formel verstanden werden:

$R_xSi(OR)_{4-x}$, wobei x = 0-3, R = C1-C15-Alkylgruppe, C5-C20-Aryl- oder Heteroarylgruppe und $(X-R^1)_xSi(OR^2)_{4-x}$, wobei x = 1-3, $R^1 = -(CH_2)_y-$ mit y = 1 -5, $-CH_2O(CH_2)_y-$ mit y = 1-5, C5-C20-Aryl- oder Heteroarylgruppe, $R^2$ = C1-C15-Alkylgruppe oder C5-C20-Aryl- oder Heteroarylgruppe, X = epoxy, isocyanato, anhydrido oder methacryloxy. Weitere im Rahmen der vorliegenden Erfindung verwendbare Vorläufermonomere für das anorganische Polymer haben die Formel: $(X-R^1)_xSi(OR^2)_{4-x}$, wobei x = 1 -3, $R^1 = -(CH_2)_y-$ mit y = 1 -5, $-CH_2O(CH_2)_y-$ mit y = 1-5, C5-C20-Aryl- oder Heteroarylgruppe, $R^2$ = C1-C15-Alkylgruppe oder C5-C20-Aryl- oder Heteroarylgruppe, X = hydroxy, amino, vinyl oder $-CO_2Z$, $-PO_3Z_2$, $-SO_3Z$ mit Z = Wasserstoff, Alkalimetallkation (Li, Na, K, Cs), C1-C15-Alkylgruppe, C1-C15-Alkoxygruppe, C5-C20-Aryl- oder Heteroarylgruppe, $SiR^3_3$ mit $R^3$ = C1-C15-Alkylgruppe, C5-C20-Aryl- oder Heteroarylgruppe, C1-C15-Alkoxygruppe oder Ethylenoxygruppe, wobei die vorstehenden Reste Z und/oder $R^3$ mit Halogen-, OH-, CN-Gruppen substituiert sind und/oder $(Het(C=O)-N(R^6)-R^5)_xSi(OR^4)_{4-x}$, wobei x = 1-3, $R^4$ = C1-C15-Alkylgruppe oder C5-C20-Aryl- oder Heteroarylgruppe, $R^5 = -(CH_2)_y$ mit y = 1-5 und C5-C20-Aryl- oder Heteroarylgruppe, $R^6$ = Wasserstoff, C1-C15-Alkylgruppe oder C5-C20-Arylgruppe und Het = Heteroarylgruppe mit bevorzugt im Ring stickstoffhaltigen aromatischen Heterocyclen.

Gemeinsames Strukturmerkmal dieser Vorläufermonomere $R_xSi(OR)_{4-x}$, $(X-R^1)_xSi(OR^2)_{4-x}$ oder $(Het(C=O)-N(R^6)-R^5)_xSi(OR^4)_{4-x}$ aus der Gruppe der Silane ist mindestens ein kondensationsfähiger bzw. hydrolysierbarer Alkoxy- bzw. Aryloxy-Subsitutent OR, $OR^2$ bzw. $OR^4$, aus dessen Abspaltung die $(-Si-O-)_x$ Wiederholungseinheiten des anorganischen Polymers hervorgeht.

Bevorzugte Silane der Gruppe $R_xSiOR_{4-x}$ sind Dimethoxydimethylsilan, Diethoxydimethylsilan, Ethyltrimethoxysilan, Tetraethoxysilan und Tetramethoxysilan. Aus der Gruppe der Vorläufermonomere $(Het(C=O)-N(R^6)-R^5)_xSi(OR^4)_4$, sind gemäß nachfolgendem Formelbild

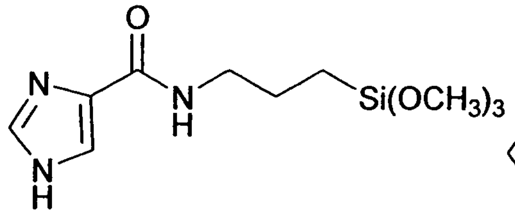

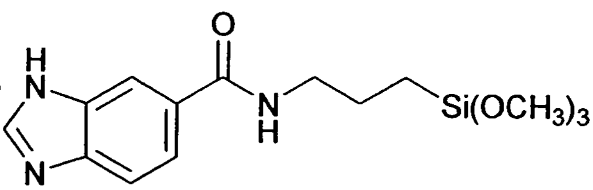

N-(3-Trimethoxysilylpropyl)-benzimidazol-5-carbonsäureamid und N-(3-Trimethoxy-silylpropyl)-imidazol-4-carbonsäureamid besonders bevorzugt.

Zu den bevorzugten Silanen der Gruppe $(X\text{-}R^1)_xSi(OR^2)_{4-x}$ gehören Aminophenyltrimethoxysilan, 3-Aminopropyltriethoxysilan, 3-Isocyanatopropyltrimethoxysilan und besonders bevorzugt (3-Glycidoxypropyl)trimethoxysilan sowie Diethylphosphatoethyltriethoxysilan. Die Epoxy-, Isocyanat-, Anhydrid- bzw. Methacryloxy-Funktion X des Substituenten X-$R^1$ der obengenannten Silane $(X\text{-}R^1)_xSi(OR^2)_{4-x}$ erlaubt eine kovalente Bindung des Vorläufermonomers an die NH-Funktion der Polyazolpolymere, wie exemplarisch in nachstehendem Formelbild verdeutlicht:

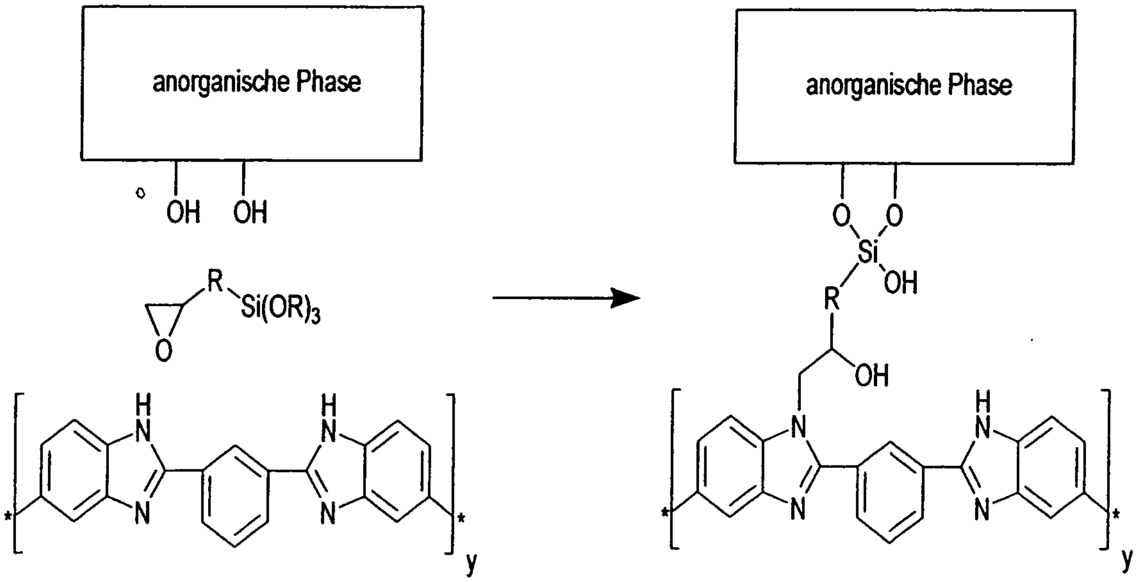


Hierdurch wird die mechanische und thermische Stabilität der erfindungsgemäßen Hybridmembranen durch kovalente Bindungen zwischen dem mindestens einen organischen und dem mindestens einen anorganischen Polymer gesteigert. Diese kovalente Verknüpfung tritt zu den Wasserstoffbrücken zwischen Si-OH-Funktionen des anorganischen Polymers und den NH-Funktionen des bevorzugten Polybenzimidazols hinzu.

Weiterhin werden unter Vorläufermonomeren für das mindestens eine anorganische Polymer Alkoxy- und Aryloxyderivate der Haupt- und Nebengruppenelemente, bevorzugt $M(OR)_y$ (y = 3- 4, M = anorganisches Zentralatom wie B, Al, Ti, Zr, R = C1-C15-Alkylgruppe oder C5-C20-Aryl- oder Heteroarylgruppe) und/oder Alkyl- und Arylderivate mehrbasiger Oxosäuren $R_nXO_m$ (n > 1, m > 2 mit m > n, X = P, S, Se, Mo, W, As, Bi, Ge, Sn, Pb, Cr; R = H, C1-C15-Alkylgruppe oder C5-C20-Aryl- oder Heteroarylgruppe oder $SiR^1_3$ mit $R^1$ = C1-C15-Alkylgruppe oder C5-C20-Aryl- oder Heteroarylgruppe) verstanden. Hier sind wie bei den silikatischen Monomeren die Gruppen OR kondensationsfähig. Besonders bevorzugt als Vorläufermonomere aus der Gruppe $M(OR)_y$ sind Borsäuretriphenylester, Borsäuretriethylester, Titan(IV)ethylat, Zirkon(IV)ethylat, Aluminiumtriethylat. Aus der Gruppe $R_nXO_m$ sind Phosphorsäure-tris-(trimethylsilylester), Phosphorsäure-tris-(triethylsilylester), Bis(2-ethylhexyl)phosphat, Diphenylphosphat, Phosphorsäuretritolylester und Triphenylphosphat besonders bevorzugt. Darüberhinaus enthalten die erfindungsgemäßen Hybridmembranen in einer bevorzugten Ausführungsform mindestens ein Additiv, welches aus folgenden Stoffklassen ausgewählt wird: Oxosäurederivate der Haupt- und Nebengruppenelemente mit Wolfram, Silicium, Antimon, Phosphor, Tantal, Niobium, Titan, Schwefel, Arsen, Wismut, Selen, Germanium, Zinn, Blei, Bor, Chrom und/oder Molybdän als Zentralatom, bevorzugt $H_3PW_{12}O_{40} \times nH_2O$ (n = 21 - 29), $H_3SiW_{12}O_{40} \times nH_2O$ (n = 21 - 29), $H_xWO_3$ (x = 0.3 bis 1), $HSbWO_6$, $H_3PMo_{12}O_{40}$, $H_2Sb_4O_{11}$, $HTaWO_6$, $HNbO_3$, $HTiNbO_5$, $HTiTaO_5$, $HSbTeO_6$, $H_5Ti_4O_9$, $HSbO_3$, $H_2MoO_4$ und/oder Oxide $M_xO_y$ mit x = 1-2 und y = 2-5, bevorzugt M = Al, Sb, Th, Sn, Zr, Mo und/oder Schicht-, Band- und/oder Gerüstsilikate, bevorzugt Zeolithe, H-Natrolite, H-Mordenite, H-Montmorillonite, Ammonium-Analcine, Ammonium-Sodalite, Ammonium-Gallate. Der Anteil des Additivs in der erfindungsgemäßen Hybridmembran beträgt 1-20 % bezogen auf das organische Polymer. Der Zusatz von mindestens einem dieser Additive erhöht die mechanische Stabilität der erfindungsgemäßen Membran im Hochtemperaturbereich weiter.

Der Löslichkeitsgrad der erfindungsgemäßen Hybridmembranen in N,N-Dimethylacetamid beträgt höchstens 30 Gew%, während PBI-Vergleichsmembranen einen höheren Löslichkeitsgrad von mindestens 55 Gew% aufweisen.

Die erfindungsgemäßen Hybridmembranen können von sich aus bereits protonenleitend sein, jedoch wird diese Protonenleitfähigkeit durch die Aufnahme von Dotierungsmittel deutlich erhöht. In nicht zu erwarten gewesener Weise wurde gefunden, daß die erfindungsgemäßen dotierten Hybridmembranen eine deutlich höhere Protonenleitfähigkeit besitzen als entsprechende Membranen ohne die anorganischen Polymere und ohne die Additive. Da die Additive

durch Einbau von Störstellen die Protonenleitfähigkeit erhöhen, ist es beispielsweise möglich, den Dotierungsgrad der Hybridmembranen herabzusetzen, ohne daß die daraus gefertigten Brennstoffzellen eine geringere Leistung besäßen. Das fixierte Dotierungsmittel ist vorzugsweise Phosphorsäure. Überraschenderweise fixieren die erfindungsgemäßen Hybridmembranen das Dotierungsmittel langanhaltend, woraus eine hohe Langzeitbeständigkeit im Brennstoffzellenbetrieb resultiert.

Das erfindungsgemäße Verfahren zur Herstellung einer erfindungsgemäßen Hybridmembran umfaßt die folgenden Schritte:

A) Ausformen einer Membrangießlösung mindestens aus einem basischen organischen Polymer, zwei Vorläufermonomeren für ein anorganisches Polymer, einem basischen Katalysator und Lösungsmittel zu einer Membranform,
B) Entfernen von Lösungsmittel und von flüchtigen Kondensationsprodukten aus der Membranform bei Temperaturen im Bereich von 50 bis 150 °C, bis eine selbsttragende Polymermembran erhalten wird,
C) Tempern der im Schritt B) erhaltenen Polymermembran bei Temperaturen im Bereich von 150 bis 400 °C über einen Zeitraum von einer Minute bis 5 Stunden.

Bevorzugt wird für das mindestens eine basische organische Polymer, welches in Schritt A) eingesetzt wird, ein Polymer, ausgewählt aus der Gruppe umfassend Polybenzimidazole, Polypyridine, Polypyrimidine, Polyimidazole, Polybenzthiazole, Polybenzoxazole, Polyoxadiazole, Polychinoxaline, Polythiadiazole und/oder Poly(tetrazapyrene). Besonders bevorzugt wird in Schritt A) mindestens ein organisches Polymer aus der Gruppe der Polybenzimidazole verwendet, bevorzugt Poly(2,2'-(m-phenylen)-5,5'-dibenzimidazol) und/oder Poly-2,5-benzimidazol.

In einer weiteren bevorzugten Ausführungsform entstammt mindestens eines der Vorläufermonomere, aus denen in Schritt A) das anorganische Polymer generiert wird, aus der Gruppe von Verbindungen mit der allgemeinen Formel:

$R_xSiOR_{4-x}$, wobei x = 0-3, R = C1-C15-Alkylgruppe oder C5-C20-Aryl- oder Heteroarylgruppe und/oder $(X\text{-}R^1)_xSi(OR^2)_{4-x}$, wobei x = 1-3, $R^1$ = $-(CH_2)_y-$ mit y = 1-5, $-CH_2O(CH_2)_y-$ mit y = 1-5, C5-C20-Aryl- oder Heteroarylgruppe, $R^2$ = C1-C15-Alkylgruppe oder C5-C20-Aryl- oder Heteroarylgruppe, X = hydroxy, amino, epoxy, isocyanato, anhydrido, methacryloxy, vinyl oder $-CO_2Z$, $-PO_3Z_2$, $-SO_3Z$ mit Z = Wasserstoff, Alkalimetallkation (Li, Na, K, Cs), C1-C15-Alkylgruppe, C1-C15-Alkoxygruppe, C5-C20-Aryl- oder Heteroarylgruppe, $SiR^3_3$ mit $R^3$ = C1-C15-Alkylgruppe, C5-C20-Aryl- oder Heteroarylgruppe, C1-C15-Alkoxygruppe oder Ethylenoxygruppe, wobei die vorstehenden Reste Z und/oder $R^3$ mit Halogen-, OH-, CN-Gruppen substituiert sind und/oder $(Het(C{=}O)\text{-}N(R^6)\text{-}R^5)_xSi(OR^4)_{4-x}$, wobei x = 1-3, $R^4$ = C1-C15-Alkylgruppe oder C5-C20-Aryl- oder Heteroarylgruppe, $R^5$ = $-(CH_2)_y$ mit y = 1-5 und C5-C20-Aryl- oder Heteroarylgruppe, $R^6$ = Wasserstoff, C1-C15-Alkylgruppe oder C5-C20-Arylgruppe und Het = Heteroarylgruppe mit bevorzugt im Ring stickstoffhaltigen aromatischen Heterocyclen.

Als bevorzugte Silane der Gruppe $R_xSiOR_{4-x}$ werden Dimethoxydimethylsilan, Diethoxydimethylsilan, Ethyltrimethoxysilan, Tetraethoxysilan und Tetramethoxysilan in Schritt A) des erfindungsgemäßen Verfahrens eingesetzt.

Als bevorzugte Silane der Gruppe $(X\text{-}R^1)_xSi(OR^2)_{4-x}$ werden Aminophenyltrimethoxysilan, 3-Aminopropyltriethoxysilan, 3-Isocyanatopropyltrimethoxysilan und besonders bevorzugt (3-Glycidoxypropyl)trimethoxysilan sowie Diethylphosphatoethyltriethoxysilan in Schritt A) verarbeitet.

Aus der Gruppe $(Het(C{=}O)\text{-}N(R^6)\text{-}R^5)_xSi(OR^4)_{4-x}$ werden in Schritt A) des erfindungsgemäßen Verfahrens N-(3-Trimethoxysilylpropyl)-benzimidazol-5-carbonsäureamid und N-(3 -Trimethoxysilylpropyl)-imidazol-4-carbonsäureamid bevorzugt eingesetzt.

Neben silikatischen Monomeren werden als Vorläufermonomere für das mindestens eine anorganische Polymer in Schritt A) des erfindungsgemäßen Verfahrens Alkoxy- und Aryloxyderivate der Haupt- und Nebengruppenelemente, bevorzugt $M(OR)_y$ (y = 3-4, M = anorganisches Zentralatom wie B, Al, Ti, Zr, R = C1-C15-Alkylgruppe oder C5-C20-Aryl- oder Heteroarylgruppe) und/oder Alkyl- und Arylderivate mehrbasiger Oxosäuren $R_nXO_m$ ($n > 1$, $m > 2$ mit $m > n$, X = P, S, Se, Mo, W, As, Bi, Ge, Sn, Pb, Cr; R = H, C1-C15-Alkylgruppe oder C5-C20-Aryl- oder Heteroarylgruppe oder $SiR^1_3$ mit $R^1$ = C1-C15-Alkylgruppe oder C5-C20-Aryl- oder Heteroarylgruppe) eingesetzt. Besonders bevorzugt werden als Vorläufermonomere aus der Gruppe $M(OR)_y$ Borsäuretriphenylester, Borsäuretriethylester, Titan(IV)ethylat, Zirkon(IV)ethylat, Aluminiumtriethylat in Schritt A) eingesetzt. Aus der Gruppe $R_nXO_m$ kommen besonders bevorzugt Phosphorsäure-tris-(trimethylsilylester), Phosphorsäure-tris-(triethyl-silylester), Bis(2-ethylhexyl)phosphat, Diphenylphosphat, Phosphorsäuretritolylester und Triphenylphosphat in Schritt A) des erfindungsgemäßen Verfahrens zum Einsatz. Die Vorläufermonomere werden in Schritt A) mit einem Anteil von 2-200 %, besonders bevorzugt 50-100 %, bezogen auf das organische Polymer in der Membrangießlösung eingesetzt.

Das mindestens eine Vorläufermonomer wird in reiner Form oder als Lösung in einem polaren aprotischen Lösungsmittel, wie z. B. N,N-Dimethylacetamid, zu der Membrangießlösung hinzugefügt.

Die Membrangießlösung aus dem Schritt A) des erfindungsgemäßen Verfahrens ist bei Raumtemperatur überraschenderweise mehr als 24 h haltbar, ohne daß eine Kondensation auftritt. Das anorganische Polymer mit der $(\text{-A-O-})_x$ Wiederholungseinheit wird erst im Schritt B) aus den mindestens zwei Vorläufermonomeren oberhalb 50 °C gebildet. Das

erfindungsgemäße Verfahren weist eine hohe Effizienz auf, weil das anorganische Polymer durch Eintrag seiner Vorläufermonomere in die Herstellung der Gießlösungen integriert und im Verfahren in-situ gebildet wird. Der Prozeßtemperaturbereich beträgt dafür hier 50-150 °C, bevorzugt aber 65-70 °C.

Der Kondensationsprozess wird unter Verwendung eines basischen Katalysators durchgeführt. In einer vorteilhaften Ausführungsform des erfindungsgemäßen Verfahrens wird ein Alkalimetallhydroxid der allgemeinen Formel MOH mit M = Li, Na, K oder Cs, eingesetzt, um die Kondensationsreaktion unter Abspaltung der hydrolysierbaren bzw. kondensationsfähigen Substituenten der Vorläufermonomere einzuleiten. Hierdurch wird eine Bildung unlöslicher organischer Polymer-Salze vermieden.

Vorzugsweise wird der basische Katalysator in Mengen von 0.2 bis 5 Gew% bezogen auf das organische Polymer eingesetzt, besonders bevorzugt 1-3 Gew%. Das Alkalimetallhydroxid wird in der mindestens gleichen Menge Wasser gelöst und zur Gießlösung getropft. Im nachfolgenden Formelbild ist für A = Si in der Wiederholungseinheit $(\text{-A-O-})_x$ der basenkatalysierte Kondensationsvorgang verdeutlicht:

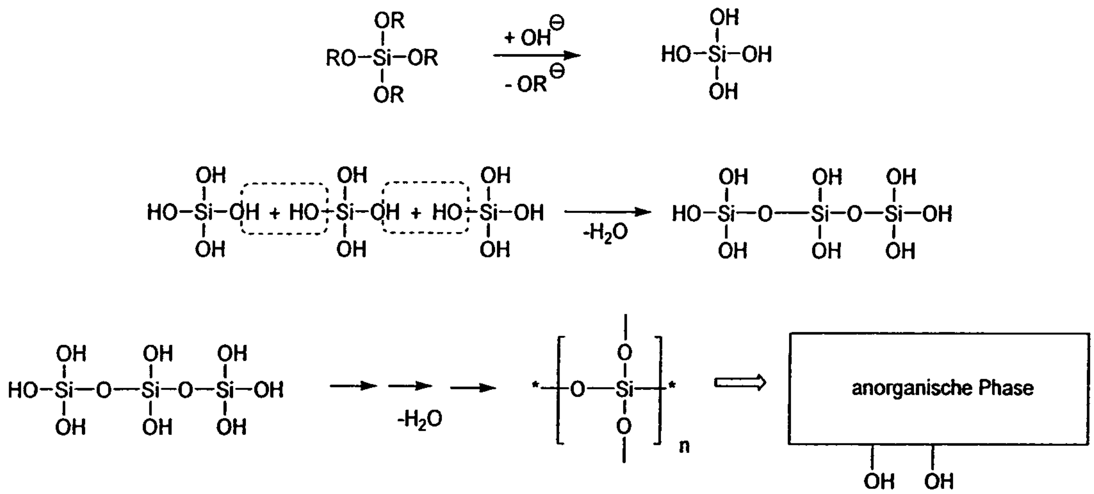


In einer weiteren bevorzugten Ausführungsform des erfindungsgemäßen Verfahrens wird zur weiteren Verbesserung der anwendungstechnischen Eigenschaften der erfindungsgemäßen Hybridmembran der Membrangießlösung im Schritt A) mindestens noch ein Additiv zugesetzt. Das mindestens eine Additiv entstammt dabei vorzugsweise den folgenden Stoffklassen: Oxosäurederivate der Haupt- und Nebengruppenelemente mit Wolfram, Silicium, Antimon, Phosphor, Tantal, Niobium, Titan, Schwefel, Arsen, Wismut, Selen, Germanium, Zinn, Blei, Bor, Chrom und/oder Molybdän als Zentralatom, bevorzugt $H_3PW_{12}O_{40}$ x $nH_2O$ (n = 21 - 29), $H_3SiW_{12}O_{40}$ x $nH_2O$ (n = 21 - 29), $H_xWO_3$ (x = 0.3 bis 1), $HSbWO_6$, $H_3PMo_{12}O_{40}$, $H_2Sb_4O_{11}$, $HTaWO_6$, $HNbO_3$, $HTiNbO_5$, $HTiTaO_5$, $HSbTeO_6$, $H_5Ti_4O_9$, $HSbO_3$, $H_2MoO_4$ und/oder Oxide $M_xO_y$ mit x = 1-2 und y = 2-5 mit M = Al, Sb, Th, Sn, Zr, Mo und/oder Schicht-, Band- und/oder Gerüstsilikate, bevorzugt Zeolithe, H-Natrolite, H-Mordenite, H-Montmorillonite, Ammonium-Analcine, Ammonium-Sodalite, Ammonium-Gallate. Besonders bevorzugt werden im erfindungsgemäßen Verfahren aus der Gruppe $M(OR)_y$ Borsäuretriphenylester, Borsäuretriethylester, Titan(IV)ethylat, Zirkon(IV)ethylat, Aluminiumtriethylat. Aus der Gruppe $R_nXO_m$ werden besonders bevorzugt Bis(2-ethylhexyl)phosphat, Diphenylphosphat, Phosphorsäuretritolylester, Phosphorsäure-tris(triethylsilylester), Phosphorsäure-tris(trimethylsilylester)und Triphenylphosphat eingesetzt.

Vorzugsweise wird das mindestens eine Additiv in Mengen von 1 bis 20 Gew% bezogen auf das organische Polymer zugesetzt, bevorzugt der Membrangießlösung aus Schritt A), besonders bevorzugt vor Zugabe des basischen Katalysators.

Durch den Verdünnungseffekt der flüssigen Vorläufermonomere, insbesondere der silikatischen Monomere, oder deren Lösungen wird die dynamische Viskosität der Membrangießlösung in Schritt A) auf 20-200 dPas erniedrigt. Diese Viskositätserniedrigung erlaubt höhere Polyazol-Feststoffgehalte von mindestens 14-15 Gew% und geringere Naßschichtdicken von weniger als 300 µm. Aus erfindungsgemäßen Membrangießlösungen kann daher pro Zeiteinheit mehr Membranfläche produziert werden. Dahingegen sind bei Vergleichsmembrangießlösungen ohne Vorläufermonomere, insbesondere ohne silikatische Monomere, Polyazol-Feststoffgehalte von lediglich 11-12 Gew% bei Naßschichtdicken von etwa 350 µm möglich, was verfahrenstechnische Nachteile zur Folge hat.

In dem Schritt C) des erfindungsgemäßen Verfahrens werden Hybridmembranen mit Trockendicken von 20 bis 60 µm, bevorzugt 20-45 µm hergestellt, die nach Durchlaufen von Schritt C) zur Weiterverarbeitung aufgerollt werden können. In einer weiteren Ausgestaltung des erfindungsgemäßen Verfahrens wird die Hybridmembran in einem weiteren Schritt D) zur Erzielung einer Protonenleitfähigkeit mit Dotierungsmitteln beladen.

Die erfindungsgemäßen, dotierten Hybridmembranen zeigen bei Dotierung mit mindestens 85 Gew% Phosphorsäure

im Vergleich zu dotierten Membranen ohne Additivzusatz und ohne anorganisches Polymer höhere mechanische Festigkeit. Erfindungsgemäße dotierte Hybridmembranen, dessen mindestens ein anorganisches Polymer ein silikatisches ist, reißen erst bei Zugspannungen von 5 $N/mm^2$ und einer Dehnung von 84 %, während die Werte für die dotierte Vergleichsmembran nur 3$N/mm^2$ und 23 % betragen.

Die nach dem vorstehend beschriebenen erfindungsgemäßen Verfahren hergestellten Hybridmembranen sind hervorragend für die Herstellung von Membran-Elektroden-Einheiten (MEA) und Hochtemperatur-Brennstoffzellen geeignet. Eine derartige erfindungsgemäße Brennstoffzelle besteht aus mindestens einer MEA, welche aus zwei flächigen Gasverteilungselektroden und einer dazwischen sandwichartig angeordneten erfindungsgemäßen Hybridmembran zusammengefügt ist. Die Hybridmembran ist mit einem Dotierungsmittel zur Erzielung einer hohen Protonenleitfahigkeit beladen, wobei das Dotierungsmittel, vorzugsweise Phosphorsäure ist und welches hervorragend fixiert wird. Die Dotierung der Hybridmembran kann beispielsweise durch Einlegen der erfindungsgemäßen Hybridmembranen in Phosphorsäure erfolgen. Die protonenleitende Anbindung der erfindungsgemäßen Hybridmembran an die phosphorsäureimprägnierten Gasverteilungselektroden erfolgt bevorzugt nach dem Heißpreßverfahren unter Druck- und Temperatureinwirkung.

Die OH-Gruppen der Phosphorsäure wechselwirken unter Ausbildung von Wasserstoffbrückenbindungen mit den Imidazolgruppen des Polyazols. Darüberhinaus können Silanolgruppen des anorganischen Polymers unter Kondensation Phosphorsäure kovalent als Phosphorsäureester gemäß folgendem Formelbild binden.

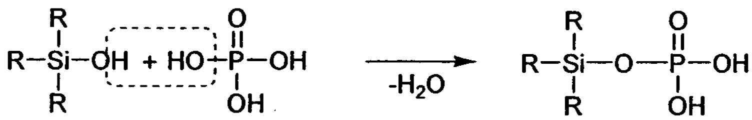


Die starke Bindungskraft der erfindungsgemäßen Hybridmembran für Phosphorsäure gestattet Dotierungsgrade bis zu 90 Gew%. Gleichzeitig wird einer Membranalterung im Brennstoffzellenbetrieb durch Auswaschen von Phosphorsäure mit dem Produktwasser entgegengewirkt. Derartige Hybridmembranen zeigen im Brennstoffzellenbetrieb bei 24 °C Leitfähigkeiten von mindestens 2 S/m und bei 160 °C Leitfähigkeiten von mindestens 10 S/m. In einer bevorzugten Ausführungsform weist eine erfindungsgemäße Hybridmembran eine Leitfähigkeit von mindestens 4 S/m bei 24 °C auf.

Die erfindungsgemäße Brennstoffzelle ist in einem Betriebstemperaturbereich von mindestens bis 250 °C im Wasserstoff/Luft-Betrieb betreibbar.

Die Erfindung soll an Hand der Figuren 1 und 2 und der Ausführungsbeispiele 1-7 näher beschrieben werden. Dabei zeigen

Fig. 1 eine Strom-Spannungskennlinie einer erfindungsgemäßen Brennstoffzelle bei 160°C und 3 bar im Wasserstoff-/Luftbetrieb und

Fig. 2 eine Strom-Spannungskennlinie einer Brennstoffzelle mit einer Vergleichsmembran bei 160°C und 3 bar im Wasserstoff-/Luftbetrieb.

**Beispiel 1**

Herstellung einer Hybridmembran

527 g Tetraethoxysilan (Fa. Wacker) und 59 g 3-(Glycidoxypropyl)trimethoxysilan (Fa. Alfa Aesar) werden in 600 g N,N-Dimethylacetamid gelöst und unter Rühren innerhalb von 70 min zu 586 g einer Lösung von PBI (gekennzeichnet dadurch, daß die inherente Viskosität einer 1%igen PBI-Lösung 1.09 dL/g beträgt) in 2847 g N,N-Dimethylacetamid mittels Tropftrichter zugetropft. Nach Zugabe von 5.9 g Kaliumhydroxid gelöst in 10 ml Wasser wird die Mischung 30 min bei Raumtemperatur gerührt und durch eine PP2 Sartopur® P8 Kapsule (20 $\mu$m) der Firma Sartorius AG filtriert und anschließend 19 h bei Raumtemperatur und 100 mbar entgast. Die Gießlösung wird mit einer Schichtdicke von 280 $\mu$m aufgetragen und bei 65 °C für 10 min getrocknet. Die Hybridmembran wird von der Trägerfolie abgelöst und für 6 min bei 190 °C und anschließend für 4 h bei 250 °C nachgetrocknet. Zusammensetzung und Eigenschaften der Membrangießlösung (Beispiel 1) sind in Tabelle 1 aufgeführt. Die Vergleichsmembran ("Vergleichsbeispiel") wurde nach dem gleichen Verfahren hergestellt.

Tabelle 1:

| No. | TEOS [gew%] | GPTMS [gew%] | PBI [gew %] | Naßdicke [$\mu$m] |
|---|---|---|---|---|
| Vergleichsbeispiel | --- | --- | 100 | 350 |

(fortgesetzt)

| No. | TEOS [gew%] | GPTMS [gew%] | PBI [gew %] | Naßdicke [μm] |
|---|---|---|---|---|
| Beispiel 1 | 45 | 5 | 50 | 280 |
| TEOS = Tetraethoxysilan, GPTMS = (3-Glycidoxypropyl)trimethoxysilan, PBI = Polybenzimidazol | | | | |

**Beispiel 2**

Bestimmung des Löslichkeitsgrades

Von einer nach Beispiel 1 hergestellten Membran wird der Löslichkeitsgrad durch Extraktion bestimmt. Es wird eine Probe aus dem Polymermembranstück von 7.7 cm x 7.7 cm Kantenlänge ausgestanzt, das Gewicht bestimmt und in einem Rundkolben plaziert. Es wird soviel N,N-Dimethylacetamid in den Rundkolben gegeben, bis das Polymerstück ganz mit Flüssigkeit bedeckt ist. Der Rundkolben wird mit Hilfe eines Ölbades auf 130 °C erhitzt. Nach einer Stunde Erhitzen bei 130 °C und Abkühlen auf Raumtemperatur wird das Lösungsmittel abgefiltert und die Probe über Nacht bei 200 °C getrocknet. Nach der Trocknung wird die Probe zum Abkühlen auf Raumtemperatur in einem mit Trockenperlen gefüllten Exsikkator gestellt und auf 100 mbar evakuiert. Der unlösliche Anteil der Probe wird gravimetrisch ermittelt. Der unlösliche Anteil ist größer als 55%. Ein Löslichkeitsgrad von 45 % wird für die Vergleichsmembran bestimmt. Die Ergebnisse sind in Tab. 2 zusammengefasst.

Tabelle 2:

| No. | Extraktion [%] | Dicke [μm] | ZP [N / mm$^2$] (Dehnung %) | E-Modul [N/mm$^2$] |
|---|---|---|---|---|
| Vergleichsbeispiel | 45 | 35 | 141 (4.9) | 5500 |
| Beispiel 1 | 100 | 40 | 166 (7.5) | 5600 |
| ZP = maximale Zugspannung, E-Modul = Elastizitätsmodul | | | | |

**Beispiel 3**

Zugspannungs-Messungen

Zur Beurteilung der mechanischen Stabilität der Membran werden Zug-SpannungsMessungen durchgeführt. Membranproben mit einer Länge von 10 cm und einer Breite von 2 cm werden in eine Meßapparatur Z 2.5 der Firma Zwick GmbH&Co eingespannt und bei Raumtemperatur und einer Geschwindigkeit von 5 mm/min einem Zugspannungstest unterzogen. Eine nach Beispiel 1 hergestellte undotierte Hybridmembran hat ein E-Modul von 5600 N/mm$^2$ und höher und reißt im Vergleich zur Vergleichsmembran bei Zugspannungen oberhalb 160 N/mm$^2$ und bei einer Dehnung >7 %. Die Vergleichsmembran hat ein E-Modul von 5500 N/mm$^2$ und reißt bereits bei Zugspannungen von 141 N/mm$^2$ und bei Dehnungen von lediglich ca. 5 %. Die Ergebnisse sind in Tab. 2 zusammengefaßt.

**Beispiel 4**

Dotierung mit Phosphorsäure

Zur Beurteilung des Aufnahmevermögens für das Dotierungsmittel werden Membranproben der Größe 11.8 cm x 13.5 cm in 85 gewichtsprozentige Phosphorsäure bei 130 °C für 30 min eingelegt. Nach dem Abwischen der anhaftenden Phosphorsäure wird die Massezunahme gravimetrisch entsprechend der nachfolgenden Formel bestimmt.

$$[(\text{Masse dotiert} - \text{Masse vor Dotierung}) / \text{Masse dotiert}] \times 100 = \text{Dotierungsgrad } [\%]$$

Im Vergleich zu einer Vergleichsmembran nehmen Hybridmembranen mehr als 85 % Phosphorsäure auf. Trotz des höheren Dotierungsgrades reißen dotierte Hybridmembranen erst bei Zugspannungen von 5 N/mm$^2$ und einer Dehnung von 84 %. Die Ergebnisse sind in Tab. 3 zusammengefaßt.

Tabelle 3:

| No. | Dotierungsgrad [%] | ZP [$N/mm^2$] (Dehnung %) | E-Modul [$N/mm^2$] | Leitfähigkeit (24 °C) [S/m] | $P_{0.6V}$ [W / $cm^2$] ($U_0$ [V]) |
|---|---|---|---|---|---|
| Ref. | 81 | 3 (23) | 58 | 3.2 | 0.18 (0.88) |
| Bsp. 1 | 87 | 5 (84) | 24 | 4.3 | 0.30 (1.02) |
| Dotierungsgrad = Gewichtszunahme aus 85 gewichtsprozentiger Phosphorsäure bei 130 °C, ZP = maximale Zugspannung, E-Modul = Elastizitätsmodul, $P_{0.6v}$ = Leistung bei 0.6 V, $U_o$ = Ruhespannung | | | | | |

**Beispiel 5**

Messung Protonenleitfähigkeit

Zur Beurteilung der Protonenleitfähigkeit werden die dotierten Hybridmembranen in Stücke von 4.5 cm x 2 cm geschnitten, die mittlere Dicke durch Messung an mindestens 3 Punkten bestimmt und in eine Messzelle eingebaut. Die Messzelle besteht aus 4 Elektroden und die Bestimmung des Widerstandes wird bei Raumtemperatur und unter Ausschluss der Umgebungsfeuchte mittels Impedanzspektroskopie durchgeführt. Im Vergleich zu der Vergleichsmembran mit einer Leitfähigkeit von 3.2 S/m weisen dotierte Hybridmembranen eine Leitfähigkeit > 4 S/m bei 24 °C auf (Tab. 3).

**Beispiel 6**

Herstellen einer Brennstoffzelle

Die nach dem Beispiel 1 hergestellten Membranen werden in 104 $cm^2$ große, quadratische Stücke geschnitten und mit kommerziell erhältlichen ELAT-Elektroden mit 2.0 $mg/cm^2$ Pt-Beladung und einer Fläche von 50 $cm^2$ der Firma E-TEK kombiniert, welche jeweils mit 0.27 g Phosphorsäure imprägniert werden. Der Membran-Elektroden-Sandwich wird zwischen planparallelen Platten 4 h bei 160° C und 50 bar als Membran-Elektroden-Einheiten verpresst. Die so erhaltenen Membran-Elektroden-Einheiten werden in eine übliche Anordnung in die Testbrennstoffzelle der Firma Fuel Cell Technologies, Inc. eingebaut und mit einem Anpressdruck von 15 bar verschlossen.

**Beispiel 7**

Bestimmen der Leistungsparameter der Brennstoffzellen nach Beispiel 6

Die Zellen gemäß Beispiel 6 werden an einen handelsüblichen Brennstoffzellenteststand FCATS Advanced Screener der Firma Hydrögenics Inc. angeschlossen und durch Beladen mit Luft und Wasserstoff in den Betriebszustand bei 160° C und 3 bar abs. versetzt. Der Gasfluß für Wasserstoff beträgt 783 sml/min und für Luft 2486 sml/min. In Fig 1 ist der Verlauf einer Strom-Spannungs-Kennlinie für die Hybridmembran bei 160 °C und 3 bar aufgezeigt. Fig 2 zeigt die Strom-Spannungskennlinie für die Vergleichsmembran unter analogen Betriebsbedingungen. Die Kennlinien wurden mit trockenen Gasen aufgenommen.

**Patentansprüche**

**1.** Hybridmembranen zur Verwendung in Polymerelektrolytmembran-Brennstoffzellen, bestehend aus mindestens einem basischen organischen Polymer und aus mindestens einem anorganischen Polymer, welche auf molekularer Ebene durchmischt sind, wobei das anorganische Polymer aus mindestens zwei Vorläufermonomeren während der Membranbildung gebildet ist,
wobei zwischen den Polymeren eine aus kovalenten Bindungen bestehende Wechselwirkung vorhanden ist, wobei das erste Vorläufermonomer die folgende allgemeine Formel aufweist:

$$R_wSi\ (OR)_{4-w},$$

wobei w = 0-3,

R = C1-C15-Alkylgruppe, C5-C20 Aryl- oder Heteroarylgruppe, und

wobei das zweite Vorläufermonomer die folgende allgemeine Formel aufweist:

$(X\text{-}R^1)_xSi(OR^2)_{4-x}$,

wobei x = 1-3,
$R^1$ = - $(CH_2)_y$ - mit y = 1-5, $-CH_2O(CH_2)_y$ - mit y = 1-5, C5-C20-Aryl- oder Heteroarylgruppe,
$R^2$ = C1-C15-Alkylgruppe oder C5-C20-Aryl- oder Heteroarylgruppe,
X = epoxy, isocyanato, anhydrido oder methacryloxy.

2. Hybridmembranen nach Anspruch 1, bei der das mindestens eine basische organische Polymer ein Polymer ist, ausgewählt aus der Gruppe umfassend Polybenzimidazole, Polypyridine, Polypyrimidine, Polyimidazole, Polybenzthiazole, Polybenzoxazole, Polyoxadiazole, Polychinoxaline, Polythiadiazole und/oder Poly(tetrazapyrene).

3. Hybridmembranen nach Anspruch 2, wobei das mindestens eine organische Polymer aus der Gruppe der Polybenzimidazole Poly(2,2'-(m-phenylen)-5,5'-dibenzimidazol) und/oder Poly-2,5-benzimidazol ist, wobei eine 1-gewichtsprozentige Lösung von Poly(2,2'-(m-phenylen)-5,5'-dibenzimidazol) in N,N-Dimethylacetamid eine inherente Viskosität von mindestens 0.85 dl/g aufweist oder eine 1-gewichtsprozentige Lösung von Poly-2,5-benzimidazol in Ethanol mit 3 Gew% Natriumhydroxid eine inherente Viskosität von mindestens 1.5 dl/g aufweist.

4. Hybridmembranen nach einem der vorhergehenden Ansprüche, die mindestens ein Additiv enthalten aus der Stoffgruppe der Oxosäurederivate der Haupt- und Nebengruppenelemente mit Wolfram, Silicium, Antimon, Phosphor, Tantal, Niobium, Titan, Schwefel, Arsen, Wismut, Selen, Germanium, Zinn, Blei, Bor, Chrom und/oder Molybdän als Zentralatom und/oder aus der Stoffgruppe der Oxide $M_xO_y$ mit x = 1-2 und y = 2-5 mit M = Al, Sb, Th, Sn, Zr, Mo und/oder aus den Gruppen der Schicht-, Band- und/oder Gerüstsilikate, bevorzugt Zeolithe, H-Natrolite, H-Mordenite, H-Montmorillonite, Ammonium-Analcine, Ammonium-Sodalite, Ammonium-Gallate.

5. Hybridmembranen nach den Ansprüchen 1 und 4, wobei der Anteil des Additives 1 bis 20 Gew% bezogen auf das organische Polymer beträgt.

6. Hybridmembranen nach einem der vorstehenden Ansprüche, wobei die Hybridmembranen zur Erzielung einer Protonenleitfähigkeit ein Dotierungsmittel fixieren, wobei die Hybridmembranen als Dotierungsmittel Phosphorsäure enthalten und bei 24°C eine Leitfähigkeit von mindestens 4 S/m aufweisen.

7. Hybridmembranen nach einem der vorstehenden Ansprüche, wobei das erste Vorläufermonomer Dimethoxydimethylsilan, Diethoxydimethylsilan, Ethyltrimethoxysilan, Tetraethoxysilan oder Tetramethoxysilan ist.

8. Hybridmembranen nach einem der vorstehenden Ansprüche, wobei das zweite Vorläufermonomer (3-Glycidoxypropyl)trimethoxysilan ist.

9. Hybridmembranen nach einem der vorstehenden Ansprüche, wobei ein weiteres Vorläufermonomer für das anorganische Polymer die folgende allgemeine Formel aufweist:

$(X\text{-}R^1)_xSi(OR^2)_{4-x}$

wobei

x = 1-3,
$R^1$ = $-(CH_2)_y$. mit y = 1-5, $-CH_2O(CH_2)_y$- mit y = 1 -5, C5-C20-Aryl- oder Heteroarylgruppe,
$R^2$ = C1-C15-Alkylgruppe oder C5-C20-Aryl- oder Heteroarylgruppe,
X = hydroxy, amino, vinyl oder $-CO_2Z$, $-PO_3Z_2$, $-SO_3Z$ mit Z = Wasserstoff, Alkalimetallkation (Li, Na, K, Cs), C1-C15-Alkylgruppe, C1-C15-Alkoxygruppe, C5-C20-Aryl- oder Heteroarylgruppe, $SiR^3_3$ mit $R^3$ = C1-C15-Alkylgruppe, C5-C20-Aryl- oder Heteroarylgruppe, C1-C15-Alkoxygruppe oder Ethylenoxygruppe, wobei die vorstehenden Reste Z und/oder $R^3$ mit Halogen-, OH-, CN-Gruppen substituiert sind,

und/oder

$(Het(C=O)-N(R^6)-R^5)_xSi(OR^4)_{4-x}$,

wobei

x = 1-3,
$R^4$ = C1-C15-Alkylgruppe oder C5-C20-Aryl- oder Heteroarylgruppe,
$R^5$ = $-(CH_2)_y$ - mit y = 1-5 und C5-C20-Aryl- oder Heteroarylgruppe,
$R^6$ = Wasserstoff, C1-C15-Alkylgruppe oder C5-C20-Arylgruppe und Het = Heteroarylgruppe mit bevorzugt im Ring stickstoffhaltigen aromatischen Heterocyclen und/oder Alkoxy- und Aryloxyderivate der Haupt- und Nebengruppenelemente, bevorzugt $M(OR)_y$ (y = 3-4, M = anorganisches Zentralatom wie B, Al, Ti, Zr, R = C1-C15-Alkylgruppe oder C5-C20-Aryl- oder Heteroarylgruppe) und/oder Alkyl- und Arylderivate mehrbasiger Oxosäuren $R_nXO_m$ (n > 1, m > 2 mit m > n, X = P, S, Se, Mo, W, As, Bi, Ge, Sn, Pb, Cr; R = H, C1-C15-Alkylgruppe oder C5-C20-Aryl- oder Heteroarylgruppe oder $SiR^1_3$ mit $R^1$ = C1-C15-Alkylgruppe oder C5-C20-Aryl- oder Heteroarylgruppe).

**10.** Verfahren zur Herstellung von Hybridmembranen gemäß den Ansprüchen 1 bis 9, das die folgenden Schritte umfasst:

A) Ausformen einer Membrangießlösung mindestens aus einem organischen Polymer, zwei Vorläufermonomeren für ein anorganisches Polymer, einem basischen Katalysator und Lösungsmittel zu einer Membranform,
B) Entfernen von Lösungsmittel und von flüchtigen Kondensationsprodukten aus der Membranform bei Temperaturen im Bereich von 50 bis 150°C, bis eine selbsttragende Polymermembran erhalten wird,
C) Tempern der im Schritt B) erhaltenen Polymermembran bei Temperaturen im Bereich von 150 bis 400°C über einen Zeitraum von einer Minute bis 5 Stunden.

**11.** Verfahren nach Anspruch 10, bei dem eine Membrangießlösung eingesetzt wird, die die mindestens zwei Vorläufermonomere mit einem Anteil von 2 bis 200 Gew% bezogen auf das organische Polymer enthält.

**12.** Verfahren nach den Ansprüchen 10 bis 11, bei dem das anorganische Polymer erst in Schritt B) aus den mindestens zwei Vorläufermonomeren oberhalb 50°C gebildet wird.

**13.** Verfahren nach einem der vorstehenden Ansprüche 10 bis 12, bei dem als basischer Katalysator ein Alkalimetallhydroxid der allgemeinen Formel MOH eingesetzt wird mit M = Li, Na, K oder Cs und bei dem eine Membrangießlösung eingesetzt wird, die den basischen Katalysator in Mengen von 0.2 bis 5 Gew% bezogen auf das organische Polymer enthält.

**14.** Brennstoffzelle, bestehend aus mindestens einer Membran-Elektroden-Einheit, welche aus zwei flächigen Gasverteilungselektroden und einer dazwischen sandwichartig angeordneten Hybridmembran gemäß einem der Ansprüche 1 bis 9 gebildet ist, wobei die Hybridmembran zur Verstärkung einer Protonenleitfähigkeit ein Dotierungsmittel fixiert.

**15.** Brennstoffzelle nach Anspruch 14, wobei das Dotierungsmittel Phosphorsäure ist und wobei die Brennstoffzelle in einem Betriebstemperaturbereich bis 250°C im Wasserstoff/Luft-Betrieb betreibbar ist.

## Claims

**1.** Hybrid membranes for use in polymer electrolyte membrane fuel cells consisting of at least one basic organic polymer and at least one inorganic polymer which are mixed thoroughly on a molecular level, wherein the inorganic polymer is formed from at least two precursor monomers during the formation of the membrane,
wherein there is an interaction consisting of covalent bonds between the polymers, the first precursor monomer with the following general formula:

$R_wSi\ (OR)_{4-w}$,

where w = 0-3,
R = $C_1$-$C_{15}$-alkyl group, $C_5$-$C_{20}$ aryl or heteroaryl group, and

wherein the second precursor monomer has the following general formula:

$(X\text{-}R^1)_xSi(OR^2)_{4-x}$,

where x = 1-3,
$R^1$ = - $(CH_2)_y$ - where y = 1-5, -$CH_2O(CH_2)_y$, where y = 1-5, $C_5$-$C_{20}$-aryl group or heteroaryl group,
$R^2$ = $C_1$-$C_{15}$-alkyl group or $C_5$-$C_{20}$-aryl or heteroaryl group,
X = epoxy, isocyanato, anhydrido or methacryloxy.

**2.** The hybrid membranes according to claim 1, wherein at least one basic organic polymer is a polymer selected from the group comprising polybenzimidazoles, polypyridines, polypyrimidines, polyimidazoles, polybenzthiazoles, polybenzoxazoles, polyoxadiazoles, polyquinoxalines, polythiadiazoles and/or poly(tetrazapyrenes).

**3.** The hybrid membranes according to claim 2, wherein the at least one organic polymer is from the group of polybenzimidazoles, poly(2,2'-(m-phenylene)-5,5'-dibenzimidazole) and/or poly(2,5-benzimidazole, wherein a 1 wt% solution of poly(2,2'-(m-phenylene)-5,5'-dibenzimidazole) in N,N-dimethylacetamide has an inherent viscosity of at least 0.85 dL/g or a 1 wt% solution of poly-2,5-benzimidazole in ethanol with 3 wt% sodium hydroxide has an inherent viscosity of at least 1.5 dL/g.

**4.** The hybrid membranes according to any one of the preceding claims, containing at least one additive from the substance group of oxo acid derivatives of the main group and subgroup elements with tungsten, silicon, antimony, phosphorus, tantalum, niobium, titanium, sulfur, arsenic, bismuth, selenium, germanium, tin, lead, boron, chromium and/or molybdenum as the central atom and/or from the oxide substance group $M_xO_y$, where x = 1-2 and y = 2-5, where m = Al, Sb, Th, Sn, Zr, Mo and/or from the groups of layered silicates, band silicates and/or tectosilicates, preferably zeolites, H-natrolites, H-mordenites, H-montmorillonites, ammonium analcines, ammonium sodalites, ammonium gallates.

**5.** The hybrid membranes according to claims 1 and 4, wherein the amount of additive is 1 to 20 wt%, based on the organic polymer.

**6.** The hybrid membranes according to any one of the preceding claims, wherein the hybrid membranes secure a dopant to achieve a proton conductivity, wherein the hybrid membranes contain phosphoric acid as the dopant and have a conductivity of at least 4 S/m at 24°C.

**7.** The hybrid membranes according to any one of the preceding claims, wherein the first precursor monomer is dimethoxydimethylsilane, diethoxydimethylsilane, ethyltrimethoxysilane, tetraethoxysilane or tetramethoxysilane.

**8.** The hybrid membranes according to any one of the preceding claims, wherein the second precursor monomer is (3-glycidoxy-propyl)trimethoxysilane.

**9.** The hybrid membranes according to any one of the preceding claims, wherein an additional precursor monomer for the inorganic polymer has the following general formula:

$(X\text{-}R^1)_xSi(OR^2)_{4-x}$

wherein

x = 1-3,
$R^1$ = $(CH_2)_y$, where y = 1-5, $CH_2O(CH_2)_y$, where y = 1-5, a $C_5$-$C_{20}$-aryl group or heteroaryl group,
$R^2$ = $C_1$-$C_{15}$-alkyl group or $C_5$-$C_{20}$-aryl group or heteroaryl group,
X = hydroxy, amino, vinyl or $CO_2Z$, $PO_3Z_2$, $SO_3Z$, where Z = hydrogen, alkali metal cation (Li, Na, K, Cs), $C_1$-$C_{15}$-alkyl group, $C_1$-$C_{15}$-alkoxy group, $C_5$-$C_{20}$-aryl group or heteroaryl group, $SiR^3_3$ where $R^3$ = $C_1$-$C_{15}$-alkyl group, $C_5$-$C_{20}$-aryl group or heteroaryl group, $C_1$-$C_{15}$-alkoxy group or an ethyleneoxy group, wherein the preceding radicals Z and/or $R^3$ are substituted with halogen, OH, CN groups,

and/or

$(het\ (C{=}O)\ \text{-}N(R^6)\ \text{-}R^5)_xSi\ (OR^4)_{4-x}$,

wherein

x = 1-3,
$R^4$ = $C_1$-$C_{15}$-alkyl group or $C_5$-$C_{20}$-aryl group or heteroaryl group,
$R^5$ = - $(CH_2)_y$, where y = 1-5 and $C_5$-$C_{20}$-aryl group or heteroaryl group,
$R^6$ = hydrogen, $C_1$-$C_{15}$-alkyl group or $C_5$-$C_{20}$ aryl group and het = heteroaryl group, preferably with aromatic heterocycles, preferably containing nitrogen in the ring and/or alkoxy and aryloxy derivatives of the main group and secondary group elements, preferably $M(OR)_y$ (y = 3-4, M = inorganic central atom such as B, Al, Ti, Zr, R = $C_1$-$C_{15}$-alkyl group or $C_5$-$C_{20}$-aryl group or heteroaryl group) and/or alkyl and aryl derivatives of polybasic oxo acids $R_nXO_m$ (n > 1, m > 2, where m > n, X = P, S, Se, Mo, W, As, Bi, Ge, Sn, Pb, Cr; R = H, $C_1$-$C_{15}$-alkyl group or $C_5$-$C_{20}$-aryl group or heteroaryl group or $SiR^1_3$ where $R^1$ = $C_1$-$C_{15}$-alkyl group or $C_5$-$C_{20}$-aryl group or heteroaryl group).

**10.** A method for producing hybrid membranes according to claims 1 to 9, comprising the following steps:

A) Molding a membrane casting solution from at least one organic polymer, two precursor monomers for one inorganic polymer, a basic catalyst and a solvent to form a membrane mold,
B) Removing the solvent and volatile condensation products from the membrane mold at temperatures in the range of 50°C to 150°C until obtaining a self-supporting polymer membrane,
C) Temperature regulation of the polymer membrane obtained in step B) at temperatures in the range of 150°C to 400°C over a period of one minute to 5 hours.

**11.** The method according to claim 10, wherein a membrane casting solution containing the at least two precursor monomers in an amount of 2 wt% to 200 wt%, based on the organic polymer, is used.

**12.** The method according to claims 10 through 11,
wherein the inorganic polymer is not formed from at least two precursor monomers above 50°C until step B).

**13.** The method according to any one of the preceding claims 10 to 12, wherein an alkali metal hydroxide of general formula MOH is used as the basic catalyst, where M = Li, Na, K or Cs, and wherein a membrane casting solution containing the basic catalyst in amounts of 0.2 wt% to 5 wt%, based on the organic polymer, is used.

**14.** A fuel cell consisting of at least one membrane electrode unit, which is formed from two flat gas distribution electrodes and one hybrid membrane arranged between them like a sandwich according to any one of claims 1 to 9, wherein the hybrid membrane secures a dopant to reinforce the proton conductivity.

**15.** The fuel cell according to claim 14, wherein the dopant is phosphoric acid and wherein the fuel cell can be operated in an operating temperature range of up to 250°C in hydrogen/air operation.

## Revendications

**1.** Membranes hybrides qui sont destinées à l'utilisation dans des piles à combustible à membrane électrolyte polymère et qui sont constituées d'au moins un polymère organique basique et d'au moins un polymère inorganique lesquels sont mélangés à l'échelle moléculaire, ledit polymère inorganique étant formé, durant la formation de la membrane, à partir d'au moins deux monomères précurseurs,
les polymères interagissant l'un avec l'autre à travers des liaisons covalentes, le premier monomère précurseur présentant la formule générale suivante :

$$R_wSi\,(OR)_{4-w},$$

w étant compris entre 0 et 3,
R = groupe alkyle en C1-C15, groupe aryle ou hétéroaryle en C5-C20, et

le deuxième monomère précurseur présentant la formule générale suivante :

$(X\text{-}R^1)_x Si\ (OR^2)_{4-x}$,

x étant compris entre 1 et 3,
$R^1$ = - $(CH_2)_y$- avec y = 1 à 5, -$CH_2O\ (CH_2)_y$- avec y = 1 à 5, groupe aryle ou hétéroaryle en C5-C20,
$R^2$ = groupe alkyle en C1-C15, groupe aryle ou hétéroaryle en C5-C20,
X = époxy, isocyanato, anhydrido ou méthacryloxy.

2. Membranes hybrides selon la revendication 1, comportant en tant qu'au moins un polymère organique basique un polymère choisi dans le groupe comprenant la polybenzimidazole, la polypyridine, la polypyrimidine, le polyimidazole, le polybenzthiazole, le polybenzoxazole, le polyoxadiazole, la polyquinoxaline, le polythiadiazole et/ou le poly(tétrapyrène).

3. Membranes hybrides selon la revendication 2, l'au moins un polymère organique étant issu du groupe formé par les polybenzimidazoles poly(2,2'-(m-phénylène)-5,5'-dibenzimidazole) et/ou poly-2,5-benzimidazol, une solution à 1 % en poids de poly(2,2'-(m-phénylène)-5,5'-dibenzimidazole) dans du N,N-diméthylacétamide présentant une viscosité inhérente d'au moins 0,85 dl/g, ou une solution à 1 % en poids de poly-2,5-benzimidazole dans de l'éthanol, avec 3 % en poids d'hydroxyde de sodium, présentant une viscosité inhérente d'au moins 1,5 dl/g.

4. Membranes hybrides selon l'une des revendications précédentes, contenant au moins un additif issu de l'ensemble de produits constitué par les dérivés d'oxoacide des éléments appartenant aux groupes 1 à 18 dont l'atome central correspond au tungstène, silicium, à l'antimoine, au phosphore, tantale, niobium, titane, soufre, à l'arsenic, au bismuth, sélénium, germanium, à l'étain, au plomb, bore, chrome et/ou au molybdène, et/ou issu de l'ensemble de produits constitué par les oxydes $M_xO_y$, avec x = 1 à 2 et y = 2 à 5, avec M = Al, Sb, Th, Sn, Zr, Mo, et/ou issu de l'ensemble constitué par les phyllosilicates, les silicates en bande et les tectosilicates, s'agissant préférentiellement de zéolithes, H-natrolites, H-mordenites, H-montmorillonites, d'analcines d'ammonium, sodalites d'ammonium, gallates d'ammonium.

5. Membranes hybrides selon les revendications 1 et 4, la proportion desdits additifs étant comprise entre 1 et 20 % en poids, par rapport audit polymère organique.

6. Membranes hybrides selon l'une des revendications précédentes, lesdites membranes hybrides fixant un agent de dopage afin qu'elles deviennent conductrices de protons, les membranes hybrides contenant de l'acide phosphorique en tant qu'agent de dopage et présentant, à 24 °C, une conductivité d'au moins 4 S/m.

7. Membranes hybrides selon l'une des revendications précédentes, le premier monomère précurseur étant du diméthoxydiméthylsilane, diéthoxydiméthylsilane, éthyltriméthoxysilane, tétraéthoxysilane ou du tétraméthoxysilane.

8. Membranes hybrides selon l'une des revendications précédentes, le deuxième monomère précurseur état du (3-glycidoxypropyl)triméthoxysilane.

9. Membranes hybrides selon l'une des revendications précédentes, un autre monomère précurseur, destiné audit polymère inorganique, présentant la formule générale suivante :

$(X\text{-}R^1)_x Si\ (OR^2)_{4-x}$

dans laquelle

x est compris entre 1 et 3,
$R^1$ = - $(CH_2)_y$ avec y = 1 à 5, -$CH_2O(CH_2)_y$ - avec y = 1 à 5, groupe aryle ou hétéroaryle en C5-C20, $R^2$ = groupe alkyle en C1-C15, groupe aryle ou hétéroaryle en C5-C20,
X = hydroxyle, amino, vinyle ou -$CO_2Z$, -$PO_3Z_2$, -$SO_3Z$ avec Z = hydrogène, cation de métal alcalin (Li, Na, K, Cs), groupe alkyle en C1-C15, groupe alcoxy en C1-C15, groupe aryle ou hétéroaryle en C5-C20, $SiR^3_3$ avec $R^3$ = groupe alkyle en C1-C15, groupe aryle ou hétéroaryle en C5-C20, groupe alcoxy en C1-C15 ou groupe oxyéthylène, les radicaux Z et $R^3$ mentionnés ci-dessus étant substitués avec des groupes halogène, OH, CN,

et/ou

$(Het(C=O)-N(R^6)-R^5)_xSi(OR^4)_{4-x}$,

dans laquelle

x est compris entre 1 et 3,
$R^4$ = groupe alkyle en C1-C15 ou groupe aryle ou hétéroaryle en C5-C20,
$R^5$ = - $(CH_2)_y$- avec y = 1 à 5, et groupe aryle ou hétéroaryle en C5-C20,
$R^6$ = hydrogène, groupe alkyle en C1-C15 ou groupe aryle en C5-C20 et Het = groupe hétéroaryle, s'agissant préférentiellement d'hétérocycles aromatiques contenant de l'azote dans le cycle, et/ou dérivés alcoxy ou aryloxy des éléments appartenant aux groupes 1 à 18, s'agissant préférentiellement de $M(OR)_y$ (y = 3 à 4, M = atome central inorganique tel que B, Al, Ti, Zr, R = groupe alkyle en C1-C15 ou groupe aryle ou hétéroaryle en C5-C20), et/ou dérivés alkyle ou aryle d'oxoacides polyfonctionnels $R_nXO_m$ (n > 1, m > 2 avec m > n, X = P, S, Se, Mo, W, As, Bi, Ge, Sn, Pb, Cr; R = H, groupe alkyle en C1-C15 ou groupe aryle ou hétéroaryle en C5-C20, ou $SiR^1_3$ avec $R^1$ = groupe alkyle en C1-C15 ou groupe aryle ou hétéroaryle en C5-C20).

**10.** Procédé de fabrication de membranes hybrides selon les revendications 1 à 9, comprenant les étapes suivantes:

A) étalement sur support d'une solution de coulée de membranes, constituée au moins d'un polymère organique, de deux monomères précurseurs destinés à un polymère inorganique, d'un catalyseur basique et de solvant, pour obtenir une membrane supportée,
B) retrait de solvant et de produits de condensation volatils de la membrane supportée, à des températures comprises entre 50 et 150°C, jusqu'à obtenir une membrane polymère qui se tient toute seule,
C) traitement thermique de la membrane polymère obtenue à l'étape B) à des températures comprises entre 150 et 400 °C, pendant une durée comprise entre une minute et 5 heures.

**11.** Procédé selon la revendication 10, dans lequel on met en oeuvre une solution de coulée de membranes contenant au moins deux monomères précurseurs dont la proportion est comprise entre 2 et 200 % en poids, par rapport au polymère organique.

**12.** Procédé selon les revendications 10 à 11, dans lequel le polymère inorganique n'est formé à l'étape B), à partir d'au moins deux monomères précurseurs, au-dessus de 50 °C.

**13.** Procédé selon l'une des revendications précédentes 10 à 12, dans lequel on met en oeuvre, en tant que catalyseur basique, un hydroxyde de métal alcalin répondant à la formule générale MOH, avec M = Li, Na, K ou Cs, et dans lequel on met en oeuvre une solution de coulée de membranes contenant ledit catalyseur basique dans des quantités comprises entre 0,2 et 5 % e poids, par rapport au polymère organique.

**14.** Pile à combustible, constitué d'au moins une unité membrane-électrode, formée de deux électrodes surfaciques à distribution de gaz entre lesquelles une membrane hybride selon l'une des revendications 1 à 9 est disposée en sandwich, ladite membrane hybride fixant un agent de dopage pour augmenter une conductivité protonique.

**15.** Pile à combustible selon la revendication 14, ledit agent de dopage étant de l'acide phosphorique, et ladite pile à combustible pouvant fonctionner, en mode de fonctionnement hydrogène/air, dans une gamme de températures de travail allant jusqu'à 250 °C.

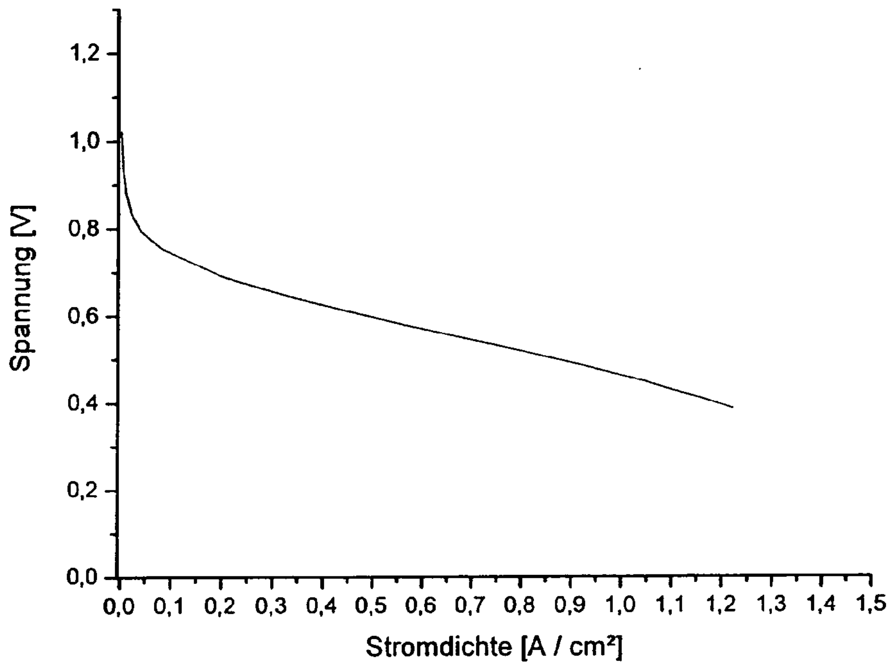
Spannung [V]
1,2
1,0
0,8
0,6
0,4
0,2
0,0
0,0 0,1 0,2 0,3 0,4 0,5 0,6 0,7 0,8 0,9 1,0 1,1 1,2 1,3 1,4 1,5
Stromdichte [A / cm²]

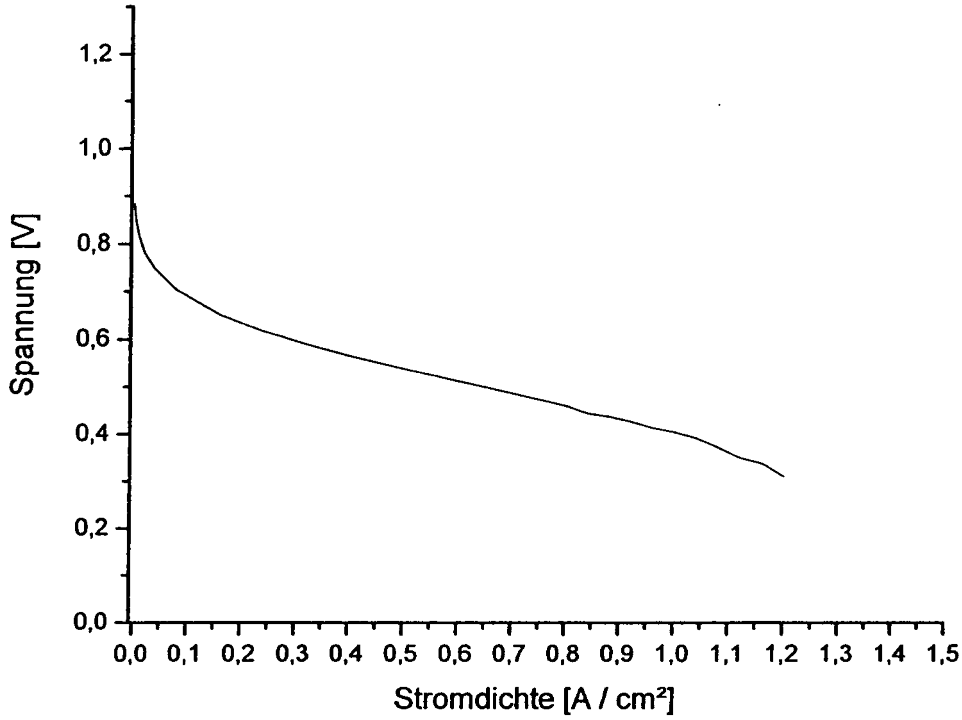
1,2
1,0
0,8
0,6
0,4
0,2
0,0
Spannung [V]
0,0 0,1 0,2 0,3 0,4 0,5 0,6 0,7 0,8 0,9 1,0 1,1 1,2 1,3 1,4 1,5
Stromdichte [A / cm²]

Fig. 2

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 5525436 A
- WO 200118894 A2
- DE 10301810 A1
- DE 10155543 C2
- WO 200044816 A1
- US 6790553 B1
- WO 2005111114 A1


### In der Beschreibung aufgeführte Nicht-Patentliteratur


- **RIKUKAWA, K. ; SANUI.** *Prog. Polym. Sci.,* 2000, 1463-1502
- **D. A. LOY ; K. J. SHEA.** *Chem. Rev.,* 1995, vol. 95, 1431-1442
- **T. SECKIN.** *Materials Science and Engineering,* 2004, vol. B 107, 166-171
- **P. STAITI ; M. MINUTOLI ; S. HOCEVAR.** *J. Power Sources,* 2000, vol. 90, 231-235
- **P. GOMEZ-ROMEREO ; J. A. ASENSIO ; S. BORROS.** *Electrochimica Acta,* 2005, vol. 50, 4715-4720